Europäisches Patentamt

European Patent Office

Office européen des brevets

(11) Veröffentlichungsnummer: **0 096 244**
A2

(12) **EUROPÄISCHE PATENTANMELDUNG**

(21) Anmeldenummer: **83104838.4**

(22) Anmeldetag: **17.05.83**

(51) Int. Cl.³: **C 02 F 1/28**
**C 02 F 1/52**

(30) Priorität: **07.06.82 DE 3221451**

(43) Veröffentlichungstag der Anmeldung:
**21.12.83 Patentblatt 83/51**

(84) Benannte Vertragsstaaten:
**CH DE FR LI NL SE**

(71) Anmelder: **HOECHST AKTIENGESELLSCHAFT**
**Postfach 80 03 20**
**D-6230 Frankfurt am Main 80(DE)**

(72) Erfinder: **Gleisberg, Dietrich, Dr.**
**Falkenweg 12**
**D-5042 Erftstadt(DE)**

(72) Erfinder: **Hündgen, Peter**
**von-Geyr-Ring 21**
**D-5030 Hürth-Burbach(DE)**

(54) **Behandlungsmittel für die Reinigung von verschmutzten Wässern.**

(57) Ein Behandlungsmittel für die chemisch-physikalische Reinigung von verschmutzten Wässern ist eine innige Mischung von Aktivkohle und mindestens einem Flockungsmittel in gut dosierbarer Form. Dabei beträgt das Gewichtsverhältnis von Aktivkohle zu Flockungsmittel zwischen 1 : 1 und 1 : 10. Als Flockungshilfsmittel kann die innige Mischung zusätzlich mindestens ein organisches Polymer enthalten.

EP 0 096 244 A2

Croydon Printing Company Ltd

HOECHST AKTIENGESELLSCHAFT          HOE 82/H 017

Behandlungsmittel für die Reinigung von
verschmutzten Wässern

Die vorliegende Erfindung betrifft ein Behandlungsmittel
für die chemisch-physikalische Reinigung von verschmutzten
Wässern. Dabei kann es sich um Oberflächenwasser, Trinkwasser, Schwimmbadwasser und Abwasser handeln.

Bei der Reinigung kommunaler Abwässer werden in der Regel
zunächst Schmutzstoffe mechanisch abgetrennt und anschließend organische Wasserinhaltsstoffe biologisch abgebaut. Neuerdings werden gleichzeitig oder anschließend
Fällsalze zur Phosphatentfernung eingesetzt, wodurch auch
ausflockbare Wasserinhaltsstoffe abtrennbar gemacht und
die Phasentrennung verbessert wird (vergl. Zeitschrift
"Umwelt", 1980, Heft 1, Seiten 73 bis 82).

In der weitergehenden Abwasserreinigung wird Aktivkohle
eingesetzt, welche entweder schwer abbaubare chemische
Substanzen adsorbiert oder den Abbau von solchen Substanzen beschleunigt (vergl. Zeitschrift "gwf-wasser/abwasser",
Band 122, 1981, Seiten 58 bis 64).

Der Anwendung von Aktivkohle in der Abwasserreinigung
stehen in erster Linie ihr hoher Bedarf und die dadurch
verursachten Betriebskosten entgegen.

Es ist daher Aufgabe der vorliegenden Erfindung, ein Behandlungsmittel zur Reinigung von verschmutzten Wässern anzugeben, durch welches der Verbrauch an Aktivkohle bei gleicher Wirksamkeit verringert wird. Das erfindungsgemäße Behandlungsmittel ist eine innige Mischung in gut dosierbarer Form aus Aktivkohle und mindestens einem Flockungsmittel, wobei das Gewichtsverhältnis von Aktivkohle zu Flockungsmittel zwischen 1 : 1 und 1 : 10, vorzugsweise 1 : 2 bis 1 : 6, beträgt.

Das Behandlungsmittel gemäß der Erfindung kann wahlweise auch noch dadurch ausgestaltet sein, daß

a) die innige Mischung in Form mechanisch fester Granalien vorliegt;

b) die Granalien einen Durchmesser von weniger als 20 mm, vorzugsweise von 0,5 bis 5 mm, aufweisen;

c) die innige Mischung in Form einer pumpbaren, nicht entmischenden Suspension vorliegt;

d) die innige Mischung als Aktivkohle Ruß enthält;

e) bei der Herstellung von Synthesegas anfallender Ruß verwendet ist;

f) die innige Mischung als Flockungsmittel mindestens ein hydrolysierbares Salz enthält;

g) als hydrolysierbare Salze Aluminium- oder Eisensalze verwendet sind;

h) die innige Mischung als Flockungshilfsmittel zusätzlich mindestens ein organisches Polymer enthält;

i) als organische Polymere Polyacrylate und/oder Polyacrylamide und/oder Polyamine verwendet sind.

Durch das erfindungsgemäße Behandlungsmittel,durch welches das Adsorptionsmittel und das Flockungsmittel dem
verschmutzten Wasser gleichzeitig zugesetzt wird, wird
erreicht, daß seine Wirkung verglichen mit der getrennten Zugabe von Aktivkohle und Flockungsmittel gesteigert ist, d. h. es tritt ein synergistischer Effekt
auf. Darüberhinaus wird durch die Wirkung des Flockungsmittels eine gute Phasentrennung, beispielsweise durch
Sedimentation, erreicht, wobei auch die feinverteilte
und dadurch in Schwebe gehaltene Aktivkohle abgetrennt
wird.

Das Behandlungsmittel gemäß der Erfindung kann aus
kostengünstigen Nebenprodukten, beispielsweise aus bei
der Synthesegasherstellung anfallendem Ruß und Grünsalz ($FeSO_4$ . 7 $H_2O$), bestehen. Zu seiner Herstellung
kann beispielsweise das Grünsalz in der wäßrigen Rußsuspension gelöst werden und nach Einstellen einer geeigneten Konsistenz der Mischung lassen sich Granalien
pressen, deren Festigkeit nach Trocknung für ihre Handhabung ausreicht.

Beispiel 1   (Vergleichsbeispiel)

Mechanisch und biologisch gereinigtes Abwasser (Ablauf
eines Nachklärbeckens) wurde zur weitergehenden Reinigung mit 200 mg/l Grünsalz ($FeSO_4$ . 7 $H_2O$; aus der
Titandioxidproduktion) versetzt und 10 Minuten gerührt.
Der dadurch erreichte Eliminationsgrad beim Summenparameter CSB (Chemischer Sauerstoffbedarf) betrug 28 % und
die Phosphor-Elimination 85 %, während der Zinkgehalt
unverändert blieb.

Beispiel 2 (Vergleichsbeispiel)

Das in Beispiel 1 verwendete Abwasser wurde zur weitergehenden Reinigung mit 50 mg/l Ruß, welcher durch Entwässern von bei der Synthesegasherstellung angefallenem
Rußwasser mit Hilfe einer Filterpresse erhalten worden
war, versetzt und 10 Minuten gerührt. Die dadurch erreichte CSB-Elimination betrug 17 %, während der Phosphorgehalt unverändert blieb. Dagegen wurde mehr als
20 % des Zinks eliminiert.

Beispiel 3 (gemäß der Erfindung)

a) Herstellung des Behandlungsmittels
   Bei der Synthesegasherstellung angefallenes Rußwasser
   wurde mit Hilfe einer Filterpresse entwässert. Der dabei erhaltene Ruß wurde mit Grünsalz ($FeSO_4 \cdot 7 H_2O$;
   aus der Titandioxidproduktion) im Gewichtsverhältnis
   1 : 4, bezogen auf die Gehalte der Trockensubstanzen,
   in einem Mischkneter vermischt.

Die Mischung wurde direkt in einen Granulator gegeben
und granuliert, wobei Granalien anfielen, welche einen Durchmesser von max. 3 mm aufwiesen. Die Granalien wurden anschließend bei 110°C getrocknet. Die
Bruchlast (bestimmt durch Auflegen der Granalien auf
eine Stahlplatte und Belasten mit einem Stempel) betrug 0,6 kp. Der Abrieb unter 1 mm (bestimmt durch
Einbringen der Granalien in einen an seinen inneren
Umfang mit Hubschaufeln versehenen Zylinder, Rotierlassen des Zylinders 10 Minuten lang mit 30 U/min und
Absieben mit einem Sieb der Maschenweite 1 mm) betrug
8,4 %.

b) Anwendung des Behandlungsmittels

In das im Beispiel 1 verwendete Abwasser wurden 250 mg/l der gemäß a) hergestellten Granalien eingetragen und 10 Minuten gerührt. Der dadurch erzielte Eliminationsgrad beim Summenparameter CSB betrug 52,5 % und der Grad der Phosphor-Elimination 89 %. Vom Zink wurden mehr als 40 % eliminiert.

Beispiel 4 (gemäß der Erfindung)

a) Herstellung des Behandlungsmittels

Schlecht backende pulverförmige Aktivkohle wurde mit Grünsalz ($FeSO_4$ . 7 $H_2O$; aus der Titandioxidproduktion) im Gewichtsverhältnis 1 : 4 in einem Mischkneter unter Zusatz von 5 Gewichts% Kaolin vermischt.

Die Mischung wurde direkt in einen Granulator gegeben und granuliert, wobei Granalien anfielen, welche einen Durchmesser von max. 3 mm aufwiesen. Die Granalien wurden anschließend bei 110°C getrocknet, ihre Bruchlast betrug dann 0,5 kp.

b) Anwendung des Behandlungsmittels

In das in Beispiel 1 verwendete Abwasser wurden 300 mg/l der gemäß a) hergestellten Granalien eingetragen und 10 Minuten gerührt. Der dadurch erzielte Eliminationsgrad beim Summenparameter CSB betrug 43 % und der Grad der Phosphor-Elimination 91 %. Vom Zink wurden 34 % eliminiert.

Beispiel 5 (gemäß der Erfindung)

a) Herstellung des Behandlungsmittels

Eine 10%ige wäßrige Lösung von Grünsalz ($FeSO_4$ . 7 $H_2O$; aus der Titandioxidproduktion) wurde unter Rühren mit 2,5 Gewichts% Ruß, bezogen auf die Trockensubstanz, versetzt, wobei eine pumpfähige Suspension erhalten wurde.

b) Anwendung des Behandlungsmittels
In das in Beispiel 1 verwendete Abwasser wurden 2 ml/l der gemäß a) hergestellten Suspension eingetragen und 10 Minuten gerührt. Der dadurch erzielte Eliminationsgrad beim Summenparameter CSB betrug 72 % und der Grad der Phosphor-Elimination 94 %. Vom Zink wurden 51 % eliminiert.

Behandlungsmittel für die Reinigung von
verschmutzten Wässern


Patentansprüche

1. Behandlungsmittel für die chemisch-physikalische Reinigung von verschmutzten Wässern, gekennzeichnet durch eine innige Mischung in gut dosierbarer Form aus Aktivkohle und mindestens einem Flockungsmittel, wobei das Gewichtsverhältnis von Aktivkohle zu Flockungsmittel zwischen 1 : 1 und 1 : 10, vorzugsweise 1 : 2 bis 1 : 6, beträgt.

2. Behandlungsmittel nach Anspruch 1, dadurch gekennzeichnet, daß die innige Mischung in Form mechanisch fester Granalien vorliegt.

3. Behandlungsmittel nach Anspruch 2, dadurch gekennzeichnet, daß die Granalien einen Durchmesser von weniger als 20 mm, vorzugsweise von 0,5 bis 5 mm, aufweisen.

4. Behandlungsmittel nach Anspruch 1, dadurch gekennzeichnet, daß die innige Mischung in Form einer pumpbaren, nicht entmischenden Suspension vorliegt.

5. Behandlungsmittel nach einem der Ansprüche 1 bis 4, dadurch gekennzeichnet, daß die innige Mischung als Aktivkohle Ruß enthält.

6. Behandlungsmittel nach Anspruch 5, dadurch gekennzeichnet, daß bei der Herstellung von Synthesegas
anfallender Ruß verwendet ist.

7. Behandlungsmittel nach einem der Ansprüche 1 bis 6,
dadurch gekennzeichnet, daß die innige Mischung als
Flockungsmittel mindestens ein hydrolysierbares
Salz enthält.

8. Behandlungsmittel nach Anspruch 7, dadurch gekennzeichnet, daß als hydrolysierbare Salze Aluminium-
oder Eisensalze verwendet sind.

9. Behandlungsmittel nach einem der Ansprüche 1 bis 6,
dadurch gekennzeichnet, daß die innige Mischung als
Flockungshilfsmittel zusätzlich mindestens ein
organisches Polymer enthält.

10. Behandlungsmittel nach Anspruch 9, dadurch gekennzeichnet, daß als organische Polymere Polyacrylate
und/oder Polyacrylamide und/oder Polyamine verwendet sind.